# EUROPEAN PATENT APPLICATION

(11) **EP 4 811 058 A1**
(43) Date of publication of application: **23.09.2026**
(21) Application number: 26157021.2
(22) Date of filing: 06.02.2026
(51) Int. Cl.: G05B 19/418, G06F 21/57, G06F 21/72, G06Q 10/0631, G06Q 50/04, H04L 9/40, H04L 9/08, G06F 21/60

(54) **ENCRYPTION KEY GENERATION SYSTEM**

(30) Priority: 17.03.2025 JP 2025042051
(71) Applicant: KUBOTA CORPORATION, Osaka-shi, Osaka 530-0011 (JP)
(72) Inventor: FUJIMOTO, Koichi, SAKAI-SHI, OSAKA, 5900908 (JP); MIURA, Keisuke, SAKAI-SHI, OSAKA, 5900908 (JP); YAMAMOTO, Takumi, SAKAI-SHI, OSAKA, 5900908 (JP)
(74) Representative: Cabinet Beau de Loménie

(57) **Abstract**

An encryption key generation system (S) includes a manager (110) to manage a vehicle production plan, and a generator (120) to generate at least one encryption key for software of at least one vehicle and/or at least one electric component. The generator (120) is configured or programmed to generate the at least one encryption key based on the vehicle production plan transmitted from the manager (110).

## Description

### BACKGROUND OF THE INVENTION

### Field of the Invention

The present invention relates to encryption key generation systems to generate and manage encryption keys for security of, for example, electronic control units (ECUs) of in-vehicle controllers for working machines.

### Description of the Related Art

Japanese Unexamined Patent Application No. 2018-195932 discloses a system for vehicles that includes a key manager to generate and manage an encryption key, and a vehicle control unit (ECU) to use the encryption key, wherein the encryption key generated by the key manager is written to the vehicle control unit.

### SUMMARY OF THE INVENTION

Japanese Unexamined Patent Application No. 2018-195932 merely discloses that an encryption key is generated by a key manager and is written to a vehicle control unit (ECU) at a vehicle production factory or an ECU production factory, etc., and does not at all mention the management cost and the generation cost of the encryption keys. Therefore, there is room for improvements regarding the management cost and the generation cost of the encryption keys.

The present invention was made in view of the above issue of such a related technique, and an object of the present invention is to provide encryption key generation systems each of which can reduce the management cost and the generation cost of encryption keys.

An encryption key generation system according to an example embodiment of the present invention includes a manager to manage a vehicle production plan, and a generator to generate at least one encryption key for software of at least one vehicle and/or at least one electric component, wherein the generator is configured or programmed to generate the at least one encryption key based on the vehicle production plan transmitted from the manager.

With one or more example embodiments of the present invention, it is possible to provide encryption key generation systems each of which can reduce the management cost and generation cost of encryption keys.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 schematically illustrates a configuration of an encryption key generation system.
FIG. 2A is a schematic side view of a working machine.
FIG. 2B illustrates types, etc., of encryption keys.
FIG. 3 is a flowchart showing an example of a process in an encryption key generation system.
FIG. 4 illustrates an example of generation of an actual key using a temporary key.
FIG. 5 is a flowchart showing an example of generation of encryption keys.
FIG. 6 is a flowchart showing an example of generation of a common key.
FIG. 7 illustrates an example of a key table storing generated encryption keys.
FIG. 8 is a flowchart showing an example of generation of per-vehicle keys.
FIG. 9 indicates that a key table stores generated per-vehicle keys.
FIG. 10 is a flowchart showing an example of generation of a per-ECU key.
FIG. 11 illustrates an example of generation, distribution and writing of encryption keys.
FIG. 12 illustrates an example of generation, distribution and writing of encryption keys in the case where the production of vehicle-model-independent components is included.
FIG. 13 illustrates a flow of a process in the case where an encryption key is written at a point in time at which a PIN of a vehicle and an ECU are not associated.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

The following describes example embodiments of the present invention with reference to drawings.

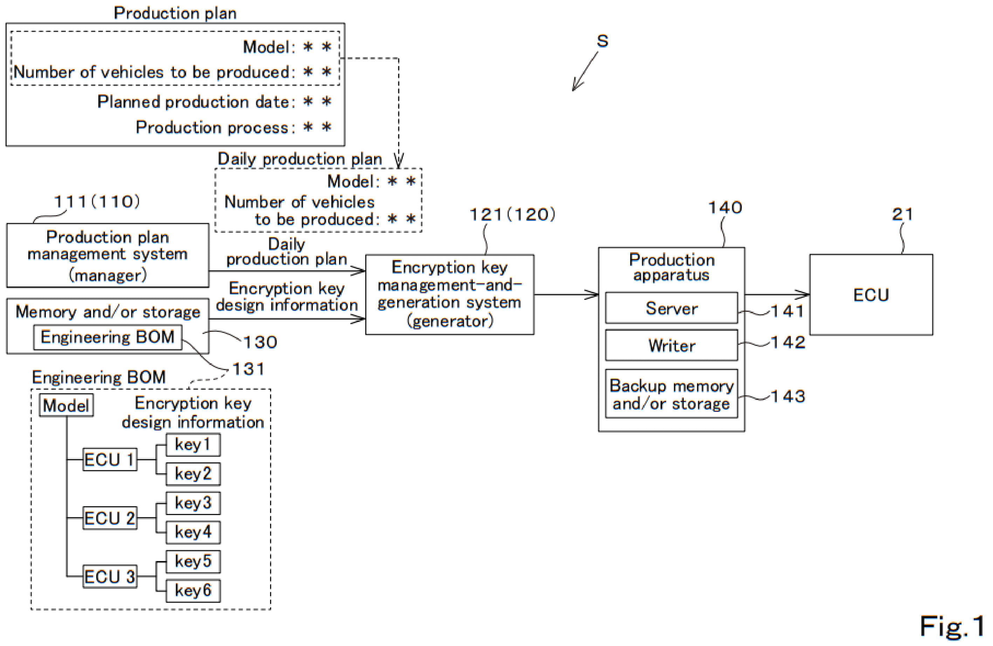

FIG. 1 schematically illustrates a configuration of an encryption key generation system S according to the present example embodiment. As shown in FIG. 1, the encryption key generation system S includes a manager 110 to manage vehicle production plan(s), and a generator 120 to generate encryption key(s) K (which hereinafter may be referred to as "key" for short) for software of vehicle(s) and/or electric component(s). An encryption key K is used to encrypt and/or decrypt software of a vehicle or an electric component. Examples of the encryption key include encryption keys to be used to restrict access to software of a vehicle or an electric component, and encryption keys to be used to encrypt software (including internal data) and store the encrypted software to keep it confidential.

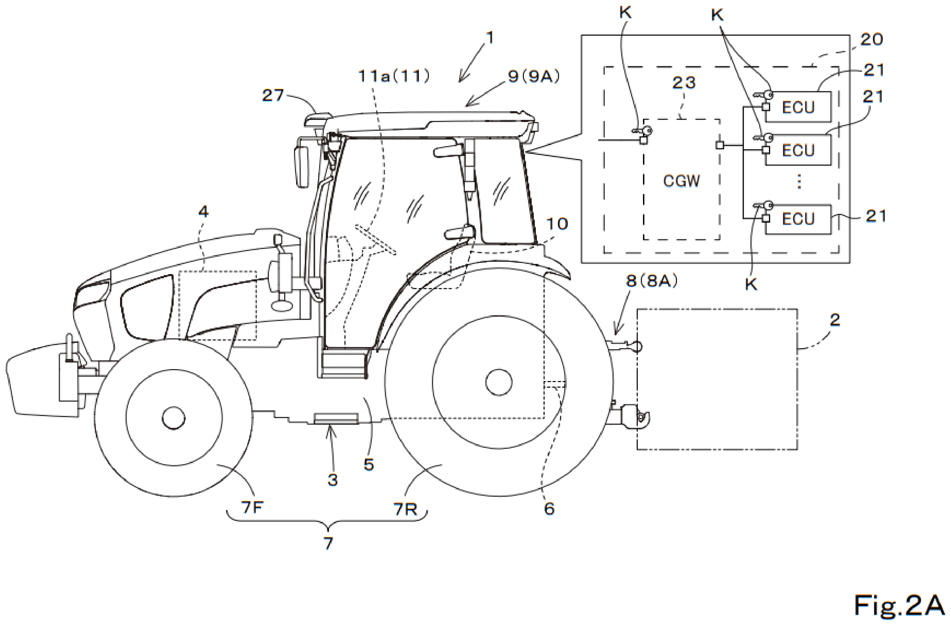

The "vehicle" as used herein is, as shown in FIG. 2A, a working machine 1. FIG. 2A is a schematic side view of the working machine 1. The working machine 1 is a vehicle configured to perform work while traveling, and is, in the present example embodiment, a tractor in which a working device 2 (implement) is attachable to a traveling vehicle body 3 (machine body) thereof. The working machine 1 is not limited to a tractor. For example, the working machine 1 may be an agricultural machine such as a combine, a rice planter or a vegetable transplanter, or a construction working machine such as a compact track loader or a backhoe.

As shown in FIG. 2A, the working machine 1 includes the traveling vehicle body 3 with a traveling device 7, a prime mover 4, and a transmission 5. The traveling device 7 imparts a propulsive force to the traveling vehicle body 3 by being driven. The traveling device 7 is a wheeled traveling device 7 including front wheels 7F and rear wheels 7R including tires.

The prime mover 4 is provided at a front portion of the traveling vehicle body 3. The prime mover 4 includes, for example, a diesel engine. The prime mover 4 may include another internal combustion engine such as a gasoline engine, an electrical motor, and/or the like. The transmission 5 is configured to, by changing speed stages, speed-change the power outputted by the prime mover 4 to change the propulsive force of the traveling device 7 and change the switching state of the traveling device 7 (switch between the forward travel and rearward travel of the traveling device 7). The transmission 5 also transmits the power from the prime mover 4 to a PTO shaft 6. The PTO shaft 6 is an output shaft to be connected to the working device 2 to drive the working device 2. PTO stands for "Power take-off".

A protection mechanism 9 to protect an operator's seat 10 is provided at an upper portion of the traveling vehicle body 3. The protection mechanism 9 is, for example, a cabin 9A surrounding the operator's seat 10. The operator's seat 10 is located inside the cabin 9A. The working machine 1 includes a steering system 11. The steering system 11 includes a steering wheel 11a, a steering shaft (rotation shaft) to be rotated as the steering wheel 11a is rotated, and an assist mechanism (power steering mechanism) to assist steering operation of the steering wheel 11a, and is configured to change the steering direction of the front wheels 7F.

The working device 2 is attached to the traveling vehicle body 3. With regard to the tractor of the present example embodiment, the working device 2 is detachably attached to the traveling vehicle body 3. Specifically, linkage(s) 8 to detachably attach the working device(s) 2 thereto is/are provided at the front portion and/or a rear portion of the traveling vehicle body 3. In FIG. 2A, the linkage 8 is provided at the rear portion of the traveling vehicle body 3. Thus, when the working device 2 is connected to the linkage 8 and the traveling device 7 is driven, the working machine 1 can tow the working device 2.

As shown in FIG. 2A, the working machine 1 includes an in-vehicle controller 20. The in-vehicle controller 20 is a controller for the working machine 1 and is configured or programmed to perform various controls relating to the working machine 1. For example, the in-vehicle controller 20 is communicably connected to apparatuses and/or devices of the working machine 1 via an in-vehicle network such as CAN, ISOBUS, LIN and/or FlexRay. For example, the in-vehicle controller 20 is configured or programmed to perform a control process (control) on the working device 2, the prime mover 4, the transmission 5, a position changer 8A , the steering system 11 and/or the like based on a signal (operation signal) inputted (received) from a manual operator.

The in-vehicle controller 20 includes a plurality of electronic control units 21 (ECUs). The plurality of electronic control units 21 include, but are not limited to, for example, an ECU for speed control, an ECU for steering control, an ECU for implement control, an ECU for automatic operation control, an ECU for engine control, and/or the like.

The in-vehicle controller 20 may be of a type that further includes a central gateway 23 (CGW) represented by a broken line in FIG. 2A. The central gateway 23 is configured to relay data between multiple channels of the plurality of electronic control units 21 in the in-vehicle network. Note that the in-vehicle controller 20 may be of a type that does not include the central gateway 23.

Referring back to FIG. 1, the manager 110 of the encryption key generation system S is, for example, a server, and manages a vehicle (working machine 1) production plan. The manager 110 may be a personal computer, a portable information device or the like. Since the manager 110 is configured to manage the vehicle production plan, the manager 110 is also referred to as a "production plan management system 111".

As shown in FIG. 1, the vehicle production plan stored in the manager 110 includes identification information relating to vehicle(s) and pieces of information indicating the number of vehicles to be produced and a planned production date. The identification information is, for example, information indicating the model of vehicle(s), but may be information other than the model, provided that the type of the vehicle(s) can be identified based on the identification information. The information indicating the number of vehicles to be produced indicates how many vehicles identified by the identification information (model) are to be produced. The information indicating the planned production date indicates the scheduled date on which the vehicles are to be produced. The vehicles in an amount (number) corresponding to the number of vehicles to be produced are produced on the planned production date.

The manager 110 outputs, to the generator 120, the identification information (model) relating to vehicles and the number of vehicles to be produced that are included in the production plan, as a daily production plan.

For example, the manager 110 determines a generation date (the date on which encryption keys K are to be generated) which is a predetermined number of days (for example, 5 days) before the planned production date included in the production plan, and outputs the identification information (e.g., model) relating to vehicles and the number of vehicles to be produced to the generator 120 on the determined generation date. With this configuration, the generator 120 is configured or programmed to, based on the identification information (model) relating to the vehicles and the number of vehicles to be produced that are outputted on the generation date, generate encryption keys K in an amount (number) corresponding to the number of vehicles to be produced, for the vehicles indicated by the identification information. That is, it is possible to generate, on the generation date that is a predetermined number of days before the planned production date, only a necessary number of encryption keys K necessary for production. Thus, it is possible to reduce or minimize the management cost and the generation cost for encryption keys K.

The manager 110 may be configured to, in addition to or instead of the daily production plan, output, to the generator 120, a weekly production plan, a monthly production plan and/or the like including the planned production date or the generation date (the date on which encryption keys K are to be generated). In such a case, the generator 120 need only be configured to (i) determine a generation date (the date on which encryption keys K are to be generated) which is a predetermined number of days (for example, 5 days) before the planned production date included in the weekly production plan or the monthly production plan or (ii) determine (use) the generation date (the date on which encryption keys K are to be generated) included in the weekly production plan or the monthly production plan.

The generator 120 is, for example, a server, and generates encryption key(s) K. The generator 120 may be a personal computer, a portable information device or the like. Since the generator 120 is configured to generate encryption keys K, the generator 120 is also referred to as an encryption key management-and-generation system 121.

The generator 120 generates encryption keys K based on the production plan (for example, daily production plan) transmitted from the manager 110. For example, the generator 120 generates, based on the identification information (model) of vehicle(s) and the number of vehicles to be produced that are included in the production plan (for example, daily production plan), encryption keys K for the vehicle(s) indicated by the identification information (model) in an amount (number) corresponding to the number of vehicles to be produced.

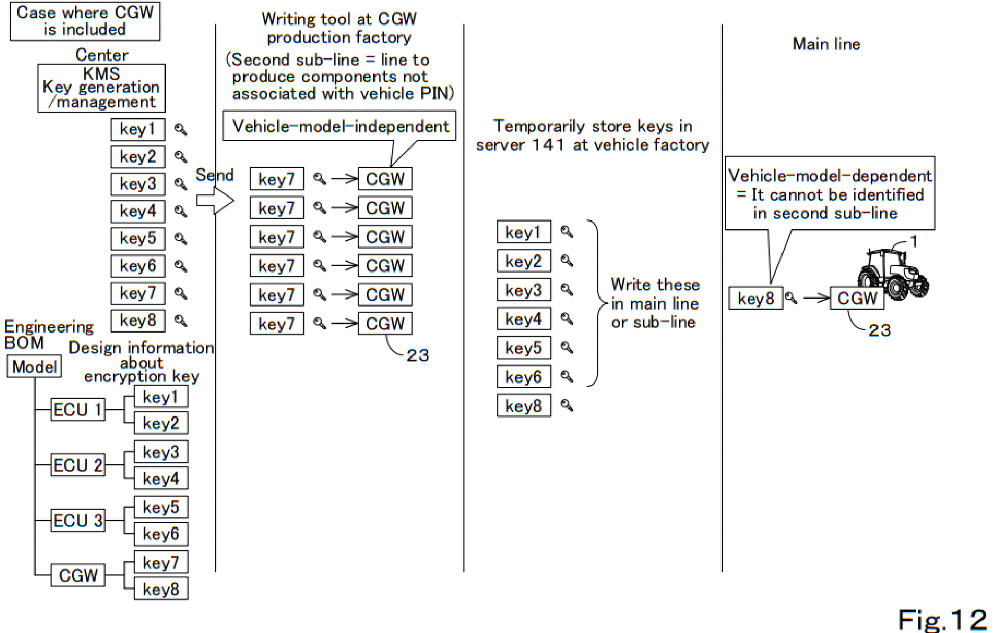

Furthermore, the encryption key generation system S includes a memory and/or a storage (hereinafter "memory") 130 to store structure information relating to component(s) of vehicle(s). The memory 130 includes, for example, a memory and/or a storage such as a hard disc drive, a solid state drive, and/or the like. The components of a vehicle at least include electric component(s) such as the electronic control unit(s) 21 (ECU(s)). As shown in FIG. 2A, in the case of the in-vehicle controller 20 including the central gateway 23, components (see FIG. 12 described later) of the vehicle further include the central gateway 23.

As shown in FIG. 1, the structure information relating to the components is, for example, an engineering bill of materials (BOM) 131, but may be a software bill of materials (SBOM). In the engineering BOM 131, structure information relating to components (including electric components) (e.g., information relating to a plurality of ECUs) is associated with the model of a working machine 1, and design information about encryption keys K is associated with structure information relating to each ECU. That is, structure information relating to components includes design information about encryption keys K.

The design information about an encryption key K includes information indicating the type of the encryption key K (e.g., temporary key (or provisional key), actual key (or real key or permanent key), common key, individual key (or unique key or distinct key), or the like), and information indicating the purpose of use (for example, for security or for message authentication). The generator 120 generates an encryption key K for a component based on the information relating to the type of the encryption key K (temporary key, actual key, common key, individual key or the like) included in structure information relating to the component. With this configuration, since the generator 120 generates an encryption key K for a component based on the information relating to the type of the encryption key K (temporary key, actual key, common key, individual key or the like) included in structure information relating to the component, it is possible to generate encryption keys K for all components of each product (vehicle) produced in low-volume, high-variety production.

The generator 120 generates encryption keys K based on the structure information relating to components (that is, based on the engineering BOM 131) stored in the memory 130. The encryption key K differs per vehicle (working machine 1) to which the encryption key K is written and/or differs per electronic control unit 21 (ECU) (which is an electric component) to which the encryption key K is written, depending on the type of the encryption key K. Specifically, the types of encryption keys K include, as described later, a common key, a per-vehicle key, and a per-ECU key. The common key is an encryption key shared between a plurality of types of vehicles. On one hand, the per-vehicle key is an encryption key that differs from one vehicle (working machine 1) to another, but is shared between a plurality of ECUs in the vehicle. On the other hand, the per-ECU key is an encryption key which at least differs from one ECU to another.

The manager 110, the generator 120, and the memory 130 include respective communicators to communicate with each other. Each communicator is a communication module to communicate directly or indirectly with another communicator, and is configured to perform wireless communication via, for example, a communication standard IEEE802. 11 Wireless Fidelity (Wi-Fi) (registered trademark), Bluetooth (registered trademark) Low Energy (BLE), Low power wide area (LPWA), Low-power wide-area network (LPWAN), and/or the like. Additionally or alternatively, the communicator is configured to perform wireless communication via, for example, a mobile phone communication network, a data communication network, and/or the like.

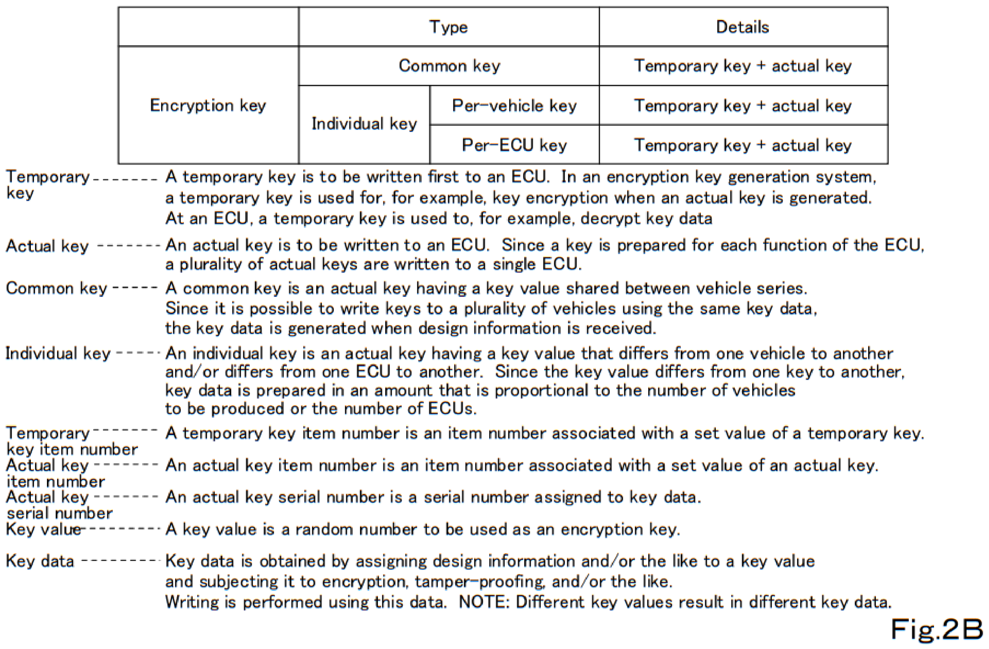

FIG. 2B illustrates the types, etc., of encryption keys K. As shown in FIG. 2B, the encryption keys K are broadly divided into common keys and individual keys. The individual keys are broadly divided into per-vehicle keys and per-ECU keys. The common key, the individual key (per-vehicle key) and the individual key (per-ECU key) each include a temporary key and an actual key.

The common key includes an actual key which has a key value shared between vehicle series. Since it is possible to write keys to a plurality of vehicles using the same key data, the generator 120 generates the key data upon receiving the design information. The individual key includes an actual key having a key value that differs from one vehicle to another and/or differs from one ECU to another. Since the key value differs from one key to another, the generator 120 prepares key data in an amount that is proportional to the number of vehicles to be produced or the number of ECUs. The temporary key is a key that is written first to an ECU. The temporary key is used for, for example, key encryption when an actual key is generated in the encryption key management-and-generation system 121 (generator 120). In the ECU, the temporary key is used to, for example, decrypt the key data. The actual key is a key that is written to the ECU. A plurality of actual keys are written to a single ECU, because the keys are prepared for respective functions of the ECU.

Referring back to FIG. 1, the encryption key generation system S may include a production apparatus 140. The production apparatus 140 is provided at a factory, and writes encryption keys K generated by the generator 120 to electronic control units 21 (ECU) and/or the like. The production apparatus 140 includes, for example, a server 141 and a writer 142. The writer 142 includes a writer tool or a writer device configured to at least write encryption keys K. The writer 142 may include, for example, a scan tool and/or the like.

The production apparatus 140 includes a communicator communicable with the generator 120. This communicator is a communication module to communicate directly or indirectly with the generator 120. Additionally or alternatively, the communicator is configured to perform wireless communication with the generator 120 via, for example, a mobile phone communication network, a data communication network, and/or the like.

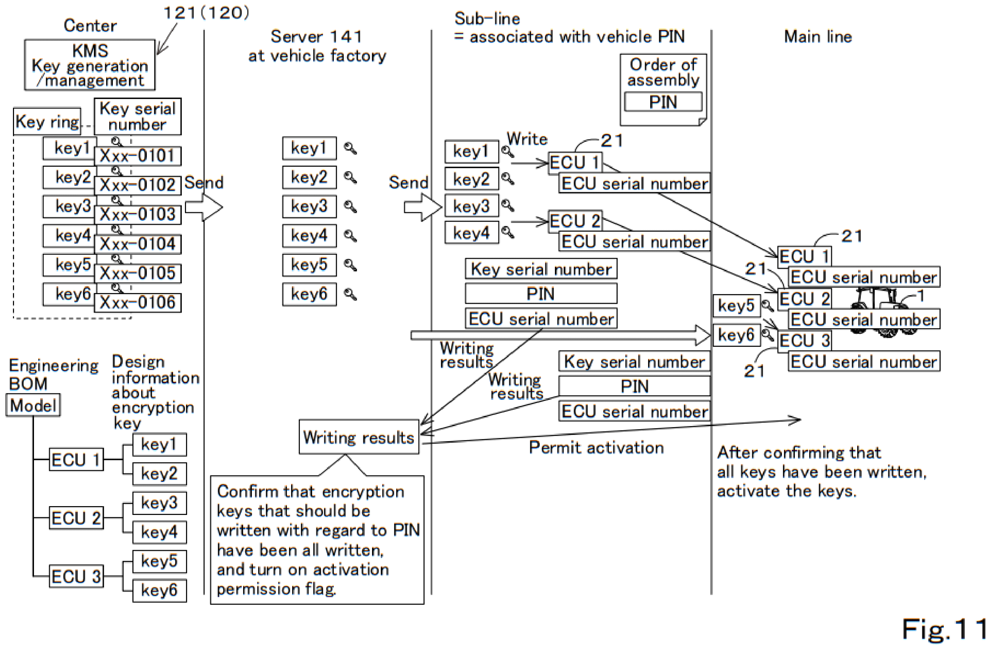

At least one server 141 (at least one server 141 of at least one production apparatus 140) is used in a main line (main production line) to produce vehicles and in a sub-line (sub-production line) different from the main line (see FIG. 11 described later). The encryption keys K may include first encryption key(s) and second encryption key(s). For example, the first encryption key may be an encryption key to be written in the sub-line, and the second encryption key may be an encryption key to be written in the main line. In such a case, such servers 141 write the first encryption key(s) to electronic control unit(s) 21 in the sub-line, and write the second encryption key(s) to electronic control unit(s) 21 in the main line.

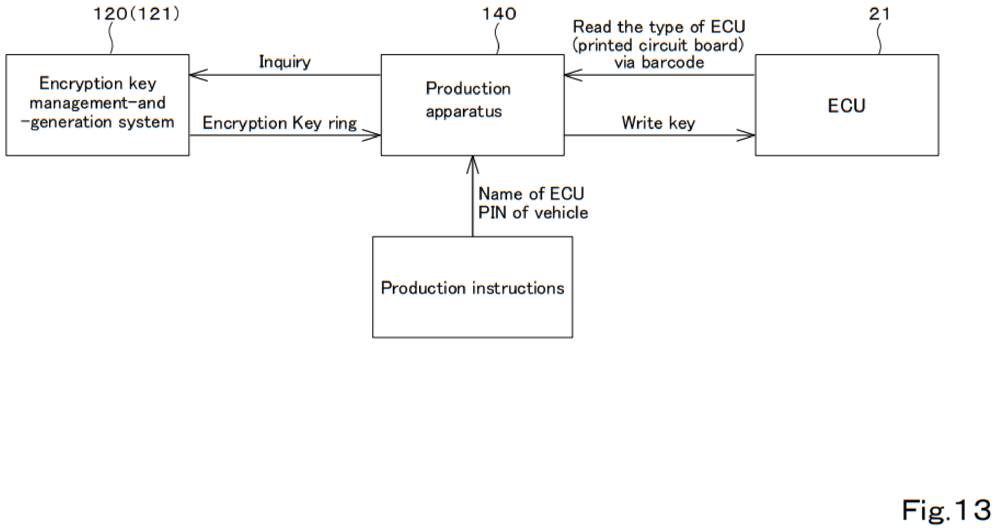

The server(s) 141 may be configured to write the first encryption key(s) and the second encryption key(s) to electronic control unit(s) 21 in the sub-line (see FIG. 13 described later).

The production plan shown in FIG. 1 may further include a vehicle production process (steps). Specifically, the vehicle production plan stored in the manager 110 may further include information indicating the vehicle production process. For example, the information indicating the vehicle production process includes steps relating to vehicle production and locations where the steps are to be performed. Examples of the information relating to the locations where the steps are performed include destination address information (for example, IP address, email address, etc.) of at least one of the production apparatus 140 or the server 141 at a location where the step(s) is/are performed (described later). The information relating to the locations where the steps are performed may include information relating to a factory at which the steps are performed and/or information relating to the type of production line (sub-line, main line or the like) in the factory.

In such a case, the generator 120 may be configured to determine the destination address information (for example, IP address, email address, etc.) of the server 141 (server 141 of the production apparatus 140) at a location where the production process of the production plan is to be performed, and output encryption keys K to the determined server 141 at the location where the production process is to be performed. That is, the generator 120 determines the server 141 in the sub-line or the main line based on the type of the production line (sub-line, main line or the like), and output encryption keys K to the determined server 141.

As described above, the production plan further includes the vehicle production process, and the generator 120 outputs encryption keys K to the server 141 (server 141 of the production apparatus 140) at a location where the production process of the production plan is to be performed. With this configuration, since the encryption keys K are outputted to the server 141 at the location where the production process of the production plan is to be performed, it is possible to smoothly perform work using the encryption keys K at the server 141 at that location.

The server 141 is configured to, in the case where the encryption keys K are properly written, activate the encryption keys K in the main line or outside the main line (see FIG. 11). For example, the server 141 is configured to, in the case where all encryption keys K are properly written, activate the encryption keys K at the last step in the main line or outside the main line (off the main line).

The memory 130 stores, as structure information, information relating to software to be preinstalled on component(s). For example, the engineering BOM 131 stores information relating to software to be preinstalled on electronic control unit(s) 21 (ECU) on a per-ECU basis. The generator 120 generates authentication information (or credentials) for the software based on the information relating to the software.

For example, the generator 120 generates the authentication information for the software by encrypting the information relating to the software using an encryption key K, and associate the authentication information for the software with the encryption key K. With this configuration, since the encryption key K for the component and the authentication information for the software of the component are required, it is possible to improve security.

The writer 142 writes the encryption key K and the authentication information for the software generated by the generator 120 to a vehicle or an electric component of a vehicle indicated by the production plan.

As described above, the encryption key generation system S is configured such that the generator 120 cooperates with the manager 110 and the memory 130 to automatically generate an encryption key K, and outputs the generated encryption key K to the production apparatus 140. Therefore, the encryption key generation system S can also be referred to as an "encryption key automatic generation-production coordination system".

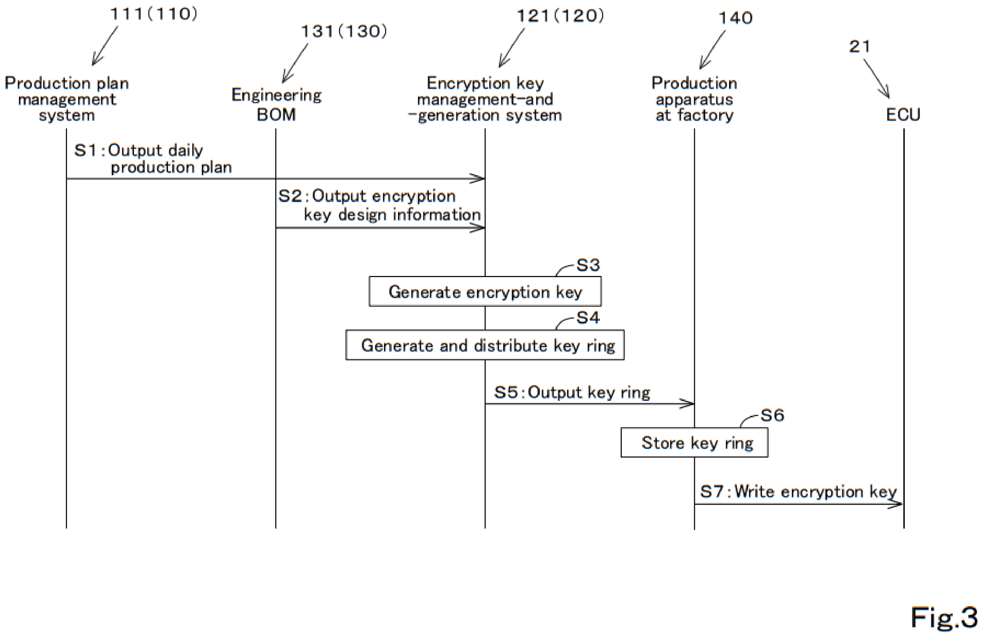

The following describes a process performed in the encryption key generation system S with reference to FIG. 3. FIG. 3 is a flowchart showing an example of a process performed in the encryption key generation system S.

As shown in FIG. 3, the production plan management system 111 (manager 110) outputs, to the encryption key management-and-generation system 121 (generator 120), identification information (model) of vehicle(s) and the number of vehicles to be produced included in a production plan (S1), as a daily production plan. The memory 130 outputs design information about encryption keys K included in the engineering BOM 131 to the encryption key management-and-generation system 121 (generator 120) (S2). For example, the memory 130 may output, to the generator 120, the design information about the encryption keys K in response to a request from the generator 120 or in coordination with the output of the manager 110. Steps S1 and S2 may be performed in any order or may be performed concurrently.

The encryption key management-and-generation system 121 (generator 120) generates encryption keys K based on the daily production plan (model of vehicle(s) and the number of vehicles to be produced) from the manager 110 and based on the design information about the encryption keys K from the engineering BOM 131 (S3).

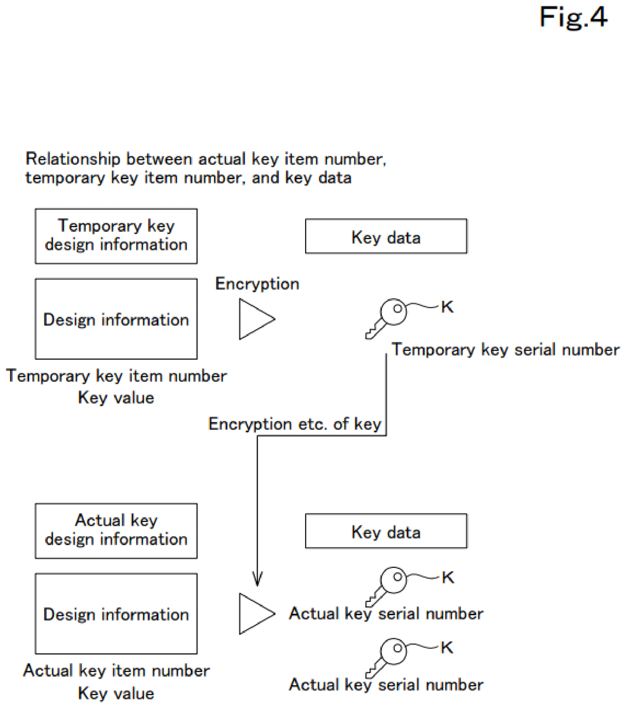

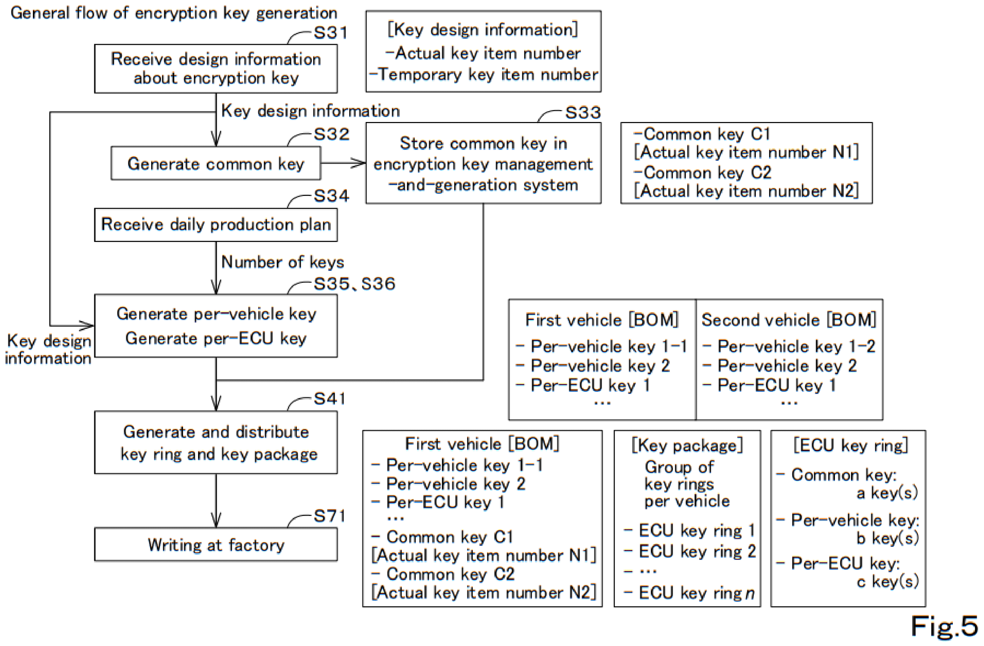

Step S3 shown in FIG. 3 is performed according to a process shown in FIGS. 4 and 5 and/or the like. FIG. 4 illustrates an example of generation of an actual key using a temporary key. FIG. 5 is a flowchart showing an example of generation of an encryption key K.

As shown in FIG. 4, the generator 120, for example, encrypts data in which design information etc. is assigned to a key value, to generate a temporary key. Specifically, the generator 120 determines a temporary key item number based on the design information about the encryption key K (for example, information indicating that the type of the encryption key K is a temporary key and indicating the purpose of use of the key) from the engineering BOM 131, and performs encryption, tamper proofing, and/or the like on the data in which the temporary key item number is assigned to the key value, to generate key data (temporary key). The key value is a random number to be used as the encryption key K. The temporary key item number is an item number associated with a set value of the temporary key. This key data is used for writing. Different key values result in different key data.

The generator 120 then assigns a temporary key serial number to the key data (temporary key). The temporary key serial number is a serial number assigned to key data.

Next, the generator 120, for example, encrypts, using the temporary key, data in which design information etc. is assigned to a key value, to generate an actual key. Specifically, the generator 120 determines an actual key item number based on the design information about the encryption key K (for example, information indicating that the type of the encryption key K is an actual key and indicating the purpose of use of the key) from the engineering BOM 131, and performs encryption, tamper proofing, and/or the like on the data in which the actual key item number is assigned to the key value, using the key data of the temporary key, to generate key data (actual key). The key value is a random number to be used as the encryption key K. The actual key item number is an item number associated with a set value of the actual key.

Next, the generator 120 assigns an actual key serial number to the key data (actual key). The actual key serial number is a serial number assigned to key data. For example, the actual key serial number is a serial number that is incremented each time an actual key is generated.

An entire flow of encryption key generation is described with reference to FIG. 5. As shown in FIG. 5, the generator 120 receives the design information about encryption key(s) K (S31). For example, the generator 120 acquires the design information about the encryption key(s) K (for example, actual key item number and temporary key item number) from the engineering BOM 131. Upon acquiring the design information about the encryption key(s) K (for example, actual key item number and temporary key item number) (S31), the generator 120 generates common key(s) (S32).

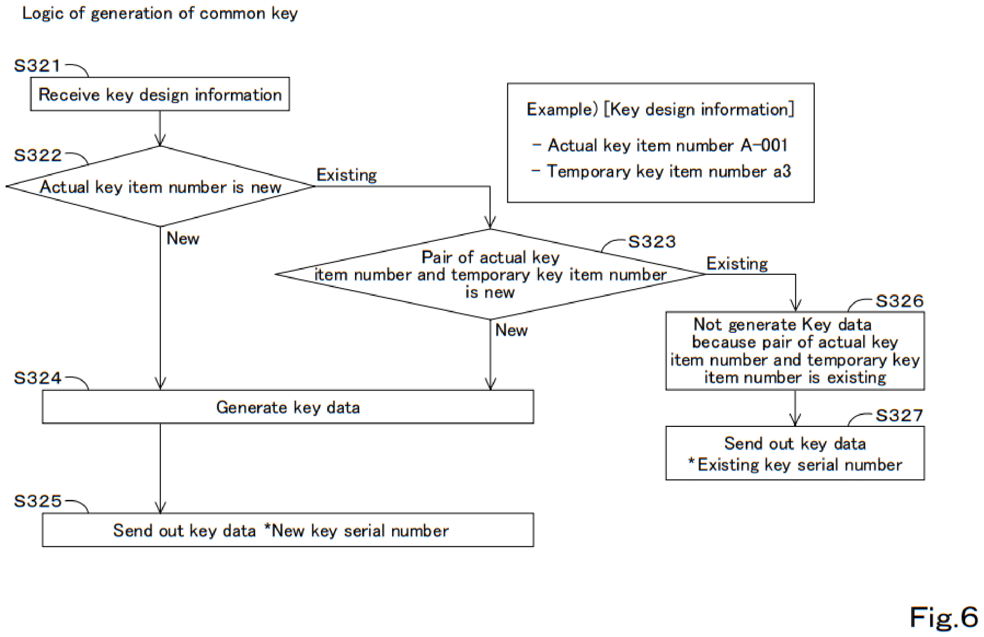

Step S32 of FIG. 5 is performed as shown in FIG. 6. FIG. 6 is a flowchart showing an example of generation of a common key. The generator 120 receives the design information about the key(s) (actual key item number and temporary key item number) from the engineering BOM 131 (S321). As shown in FIG. 6, assume that the received actual key item number is "A-001" and the received temporary key item number is "a3". The generator 120 determines whether the actual key item number (for example, "A-001") of the received design information is new or not (S322).

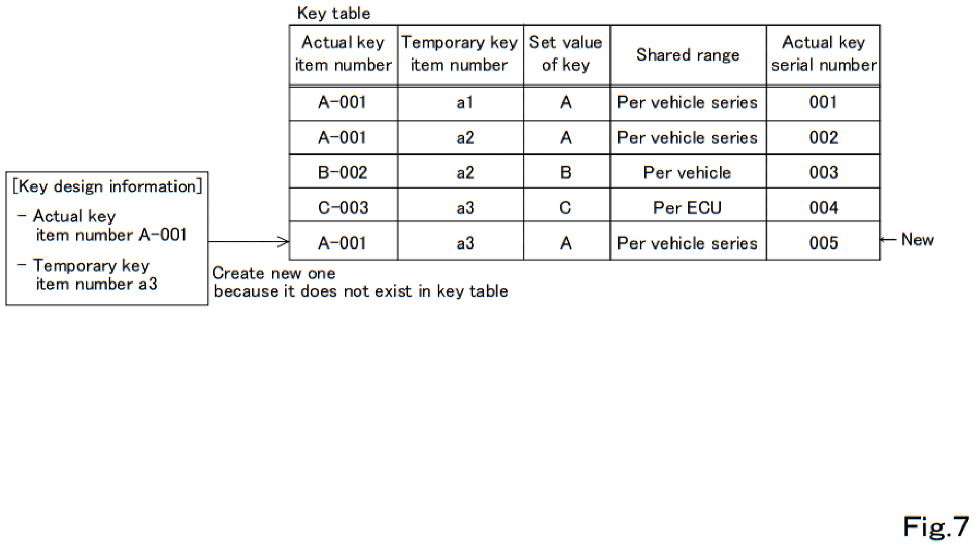

FIG. 7 illustrates an example of a key table storing generated encryption keys K. As shown in FIG. 7, the encryption key management-and-generation system 121 (generator 120) includes, in advance, a key table to store the generated encryption keys K. The key table shown in FIG. 7 already stores four encryption keys K that have been generated. For example, with regard to the first encryption key K, the actual key item number is "A-001", the temporary key item number is "a1", the set value of the key is "A", shared range is "per vehicle series", and the actual key serial number is "001". For example, with regard to the fourth encryption key K, the actual key item number is "C-003", the temporary key item number is "a3", the set value of the key is "C", shared range is "per ECU", and the actual key serial number is "004".

Since the received actual key item number (for example, "A-001") is present in the key table shown in FIG. 7, the generator 120 determines that the received actual key item number is existing ("existing" at S322), and determines whether the pair of the actual key item number and the temporary key item number is new or not (S323). Since the pair of the actual key item number ("A-001") and the temporary key item number ("a3") is not present in the key table shown in FIG.7, the generator 120 determines that the pair is new ("new" at S323), and generates key data of a common key (S324).

Specifically, as shown in FIG. 7, the generator 120 newly generates a common key. With regard to the newly generated common key, the actual key item number is "A-001", the temporary key item number is "a3", the set value of the key is "A", shared range is "per vehicle series", and the actual key serial number is "005". The generator 120 stores the newly generated common key in the key table shown in FIG. 7.

The generator 120 sends out (or outputs or transmits) key data of common key(s) (S325). The generator 120 in the present example sends out the newly generated common key. Referring back to FIG. 5, the generator 120 stores the key data of the common key(s) in a storage area of the generator 120 for generation and distribution (S33). As shown in FIG. 5, in the present example, two common keys (common key C1 of "actual key item number N1" and common key C2 of "actual key item number N2") are generated and stored in the storage area.

On the other hand, at step S322 of FIG. 6, if the received actual key item number is not present in the key table shown in FIG. 7, the generator 120 determines that the received actual key item number is new ("new" at S322) . The generator 120 generates key data including the actual key item number and the temporary key item number received at S321 (S324), and stores the generated key data in the key table shown in FIG. 7. The generator 120 then sends out the generated key data (S325) and stores the generated key data in the storage area of the generator 120 for generation and distribution (step S33 of FIG. 5).

On the other hand, at step S323, if the received pair of the actual key item number and the temporary key item number is present in the key table shown in FIG. 7, the generator 120 determines that the received pair is existing ("existing" at S323) . The generator 120 does not generate new key data because the key already exists (S326), sends out the existing key data (S327), and stores the key data in the storage area of the generator 120 for generation and distribution (step S33 of FIG. 5).

Referring back to FIG. 5, the generator 120 receives the daily production plan (S34). For example, the generator 120 acquires the number of keys based on the number of vehicles to be produced included in the daily production plan. The generator 120 generates per-vehicle key(s) and per-ECU key(s) (S35, S36).

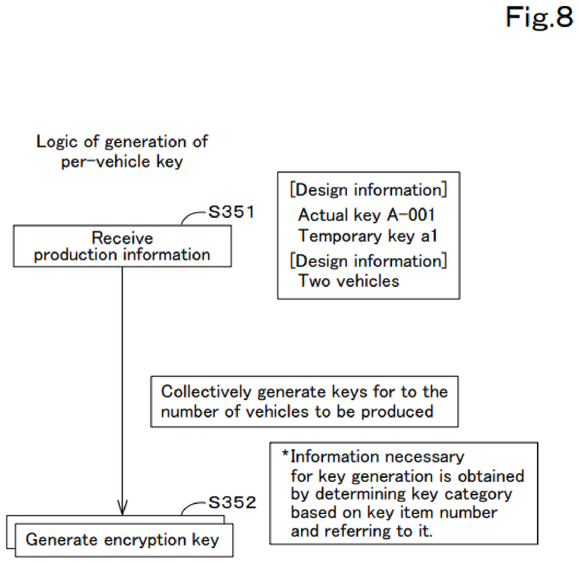

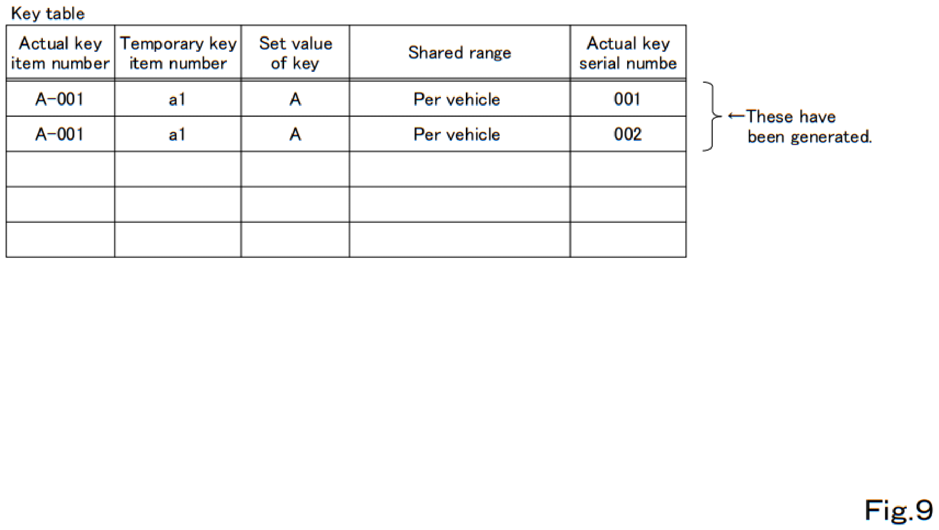

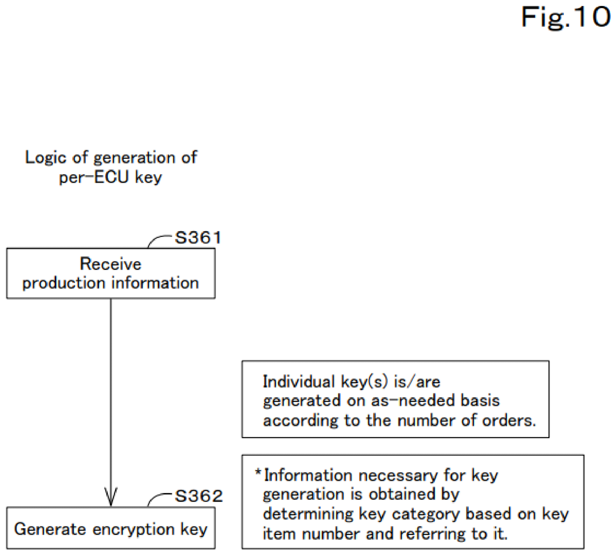

Step S35 of FIG. 5 is performed as shown in FIGS. 8 to 10. FIG. 8 is a flowchart showing an example of generation of a per-vehicle key. FIG. 9 indicates that the generated per-vehicle keys are stored in a key table. FIG. 10 is a flowchart showing an example of generation of a per-ECU key.

As shown in FIG. 8, the generator 120 receives production information (i.e., the number of vehicles to be produced) from the production plan management system 111 (manager 110) (S351). In the present example, as shown in FIG. 8, assume that the received number of vehicles to be produced is two. The generator 120 has received key design information (the actual key item number and the temporary key item number) from the engineering BOM 131 (S321). In the present example, as shown in FIG. 8, assume that the received actual key item number is "A-001" and the received temporary key item number is "a1".

The generator 120 generates per-vehicle keys (encryption key) based on the received production information (the number of vehicles to be produced is two) and key design information (the actual key item number is "A-001" and the temporary key item number is "a1") (S352). The generator 120 generates per-vehicle keys collectively in an amount (number) corresponding to the number of vehicles to be produced (two vehicles in this example). The generator 120 acquires information necessary for key generation by determining a key category (i.e., the type of key) based on the key item number and referring to it.

As shown in FIG. 9, the generator 120 generates pieces of key data (per-vehicle keys) collectively in an amount (number) corresponding to the number of vehicles to be produced (two vehicles in the present example) and stores the generated pieces of key data in the key table. With regard to each of the per-vehicle keys, the actual key item number is "A-001", the temporary key item number is "a1", the set value of the key is "A", shared range is "per vehicle", and the actual key serial number is "001" or "002".

As shown in FIG. 10, the generator 120 receives production information (i.e., the number of vehicles to be produced) from the production plan management system 111 (manager 110) (S361). The generator 120 has received key design information (the actual key item number and the temporary key item number) from the engineering BOM 131 (S321).

The generator 120 generates per-ECU key(s) (encryption key(s)) based on the received production information (the number of vehicles to be produced) and key design information (the actual key item number and the temporary key item number) (S362). The generator 120 generates per-ECU keys in an amount (number) corresponding to the number of orders. The number of orders is determined by the number of vehicles to be produced and key design information. The generator 120 acquires information necessary for key generation by determining the key category (i.e., the type of a key) based on the key item number and referring to it.

At steps S35 and S36, as shown in FIG. 5, since the number of vehicles to be produced is, for example, two, individual keys (per-vehicle keys and per-ECU keys) for two vehicles are generated. The per-vehicle keys are generated at step S35, and the per-ECU keys are generated at step S36. That is, the individual keys (per-vehicle key(s) and per-ECU key(s)) for the first vehicle [BOM] and the individual keys (per-vehicle key(s) and per-ECU key(s)) for the second vehicle [BOM] are generated.

Referring back to FIG. 5, after performing all steps S33, S35, S36, the generator 120 generates and distributes key ring(s) (i.e., a collection of keys) and key package(s) (S41).

Specifically, the generator 120 generates key ring(s) and key package(s). For example, the generator 120 combines the common keys (common key C1 and common key C2) generated at S33 and the individual keys (per-vehicle keys and per-ECU keys) for the first vehicle generated at S35 and S36 to obtain all the encryption keys K for the first vehicle. Similarly, the generator 120 combines the common keys (common key C1 and common key C2) generated at S33 and the individual keys (per-vehicle keys and per-ECU keys) for the second vehicle generated at S35 and S36 to obtain all the encryption keys K for the second vehicle.

The generator 120 generates key packages and ECU key rings shown in FIG. 5. The key package is, for example, a group of key rings per vehicle. Each ECU key ring includes a predetermined number of common key(s), per-vehicle key(s) and per-ECU key(s). The generator 120 outputs (transmits) the key ring(s) and the key package(s) to the production apparatus 140.

The production apparatus 140 acquires encryption keys K based on the received key ring(s) and key package(s) and writes the encryption keys K to the electronic control units 21 and/or the like (S71).

The following describes the writing of encryption keys K performed by the production apparatus 140 with reference to FIG. 11. FIG. 11 illustrates an example of generation, distribution and writing of encryption keys K.

As shown in FIG. 11, the generator 120 generates encryption keys K based on a daily production plan (the model and the number of vehicles to be produced ) from the manager 110 and design information relating to the encryption keys K from the engineering BOM 131. In FIG. 11, the generator 120 generates a key ring including six encryption keys K (for example, "Key 1" to "Key 6") which are assigned key serial numbers, and transmits the generated key ring to the production apparatus 140.

The server(s) 141 of the production apparatus(es) 140 transmits, for example, the six encryption keys K ("Key 1" to "Key 6") to the writer(s) 142. The encryption keys K ("Key 1" to "Key 4") written in the sub-line correspond to first encryption keys, and the encryption keys ("Key 5" and "Key 6") written in the main line correspond to second encryption keys.

In the sub-line, the writer 142 writes the encryption keys K to electronic control units 21 (ECU) associated with the "Personal Identification Number (PIN)" of a corresponding vehicle. In other words, the sub-line is a sub-production line in which the work of writing encryption keys K to ECUs associated with the "PIN" of a vehicle can be performed. For example, in the sub-line, the writer 142 writes the encryption keys K to the electronic control units 21 (ECU) and assigns ECU serial numbers to the ECUs. In FIG. 11, the encryption key K ("Key 1") and the encryption key K ("Key 2") are written to the first ECU, and an ECU serial number is assigned to the first ECU. The encryption key K ("Key 3") and the encryption key K ("Key 4") are written to the second ECU, and an ECU serial number is assigned to the second ECU.

In the main line, the writer 142 writes encryption keys K to electronic control units 21 (ECU) and assign ECU serial numbers to the ECUs. In FIG. 11, the encryption key K ("Key 5") and the encryption key K ("Key 6") are written to the third ECU, and an ECU serial number is assigned to the third ECU. The first ECU and the second ECU in the main line are the first ECU and the second ECU to which the encryption keys K have been written in the sub-line and which are now mounted on the vehicle.

As shown in FIG. 11, in the main line, the server 141 activates the encryption keys K in the case where the encryption keys K have been properly written. For example, the server 141 activates the encryption keys K after it has been confirmed that all the encryption keys K relating to the electric components of the vehicle (working machine 1) have been properly written.

Specifically, the server 141 acquires results of writing regarding the first ECU and the second ECU using the key serial numbers, the "PIN" and the ECU serial numbers, and verifies (confirms) that the results of writing are correct (the writing has been performed properly (correctly)). The server 141 acquires results of writing regarding the third ECU using the key serial numbers, the "PIN" and the ECU serial number, and confirms that the results of writing are correct (the writing has been performed properly (correctly)). In the case where the results of writing are all correct, the server 141 turns on an activation permission flag (turn on a flag).

<Variation 1> The following describes a first variation of the encryption key generation system S. The encryption keys K may include third encryption key(s) each of which is a vehicle-model-independent key and fourth encryption key(s) each of which is a vehicle-model-dependent key.

The server 141 may be configured such that, in the sub-line (for example, in a second sub-line in FIG. 12 described later), the server 141 writes the third encryption key(s) to component(s) (central gateway(s) 23) that is/are vehicle-model-independent component(s) and temporarily stores the fourth encryption key(s), and, in the main line, the server 141 writes the fourth encryption key(s) that had been temporarily stored to the component(s) (central gateway(s) 23) each of which is a vehicle-model-dependent component.

The following describes, for example, writing of encryption keys K performed at the production apparatus 140 in the case where the production of vehicle-model-independent component(s) is included, with reference to FIGS. 12 and 13. FIG. 12 illustrates an example of generation, distribution and writing of encryption keys K in the case of including production of vehicle-model-independent component(s). FIG. 13 illustrates a flow of a process in the case where an encryption key is written when a PIN of a vehicle and an ECU are not associated.

As shown in FIG. 12, the production apparatus 140 acquires encryption keys K from the encryption key management-and-generation system 121 (generator 120), and writes the encryption keys K to ECUs and/or the like in corresponding production lines.

The following describes a process in which the production apparatus 140 acquires encryption keys K from the encryption key management-and-generation system 121 (generator 120), and writes the encryption keys K to ECUs and/or the like.

As shown in FIG. 13, the production apparatus 140 receives production instructions including the "PIN" of a vehicle and ECU information (for example, ECU name(s)). The production apparatus 140 sends an inquiry about the "PIN" of the vehicle and the ECU information (for example, ECU names) indicated by the production instructions to the encryption key management-and-generation system 121 (generator 120). The generator 120 outputs, to the production apparatus 140, encryption key ring(s) relating to the "PIN" of the vehicle and the ECU information (for example, ECU names) indicated by the production instructions.

As shown in FIG. 13, when the production apparatus 140 acquires the encryption key ring from the generator 120, the production apparatus 140 reads, from an ECU corresponding to the ECU information (ECU name) indicated by the production instructions, information relating to the ECU. For example, the production apparatus 140 reads information relating to the ECU (e.g., the type of the ECU (Printed Circuit Board (PCB))) via a barcode. The production apparatus 140 determines (selects) encryption key(s) K corresponding to the read information relating to the ECU that is/are included in the encryption key ring acquired from the generator 120, and writes the determined encryption key(s) K to the ECU.

As shown in FIG. 12, when the generator 120 receives a request for encryption key ring(s) from the production apparatus 140, the generator 120 generates encryption keys K based on the daily production plan (the model and the number of vehicles to be produced) from the manager 110 and the design information relating to the encryption keys K from the engineering BOM 131. In FIG. 12, the generator 120 acquires pieces of information relating to three ECUs and one CGW as structure information relating to components (including electric components) associated with the model of the working machine 1 from the engineering BOM 131, and acquires information relating to encryption keys K ("Key 1" to "Key 8") for the components from the design information about the encryption keys K. As with the case of FIG. 11, the encryption keys K ("Key 1" to "Key 4") written in the sub-line correspond to the first encryption keys, and the encryption keys K ("Key 5" and "Key 6") written in the main line correspond to the second encryption keys. The encryption key K ("Key 7") that is a vehicle-model-independent key corresponds to the third encryption key, and the encryption key K ("Key 8") that is a vehicle-model-dependent key corresponds to the fourth encryption key. In FIG. 12, the key serial numbers assigned to eight encryption keys K ("Key 1" to "Key 8") are not illustrated.

The generator 120 generates a key ring including the eight encryption keys K ("Key 1" to "Key 8"), and transmits the generated key ring to the production apparatus 140.

The server 141 of the production apparatus 140 transmits the encryption key K ("Key 7"), for example, to the writer 142 to be used in a CGW production factory. For example, the central gateway 23 (CGW) is a component not associated with the "PIN" of a vehicle, i.e., a vehicle-model-independent component. Assuming that the first sub-line is the foregoing sub-line, a production line of the CGW production factory is a second sub-line different from the first sub-line. Examples of the second sub-line include a production line different from the first sub-line and a production line preceding the first sub-line.

As shown in FIG. 12, in the production line (second sub-line) of the CGW production factory, the writer 142 of the CGW production factory writes the encryption key K ("Key 7") to each of the central gateways 23 (CGW) corresponding to the number of vehicles to be produced (six vehicles in the present example).

As shown in FIG. 12, the writer 142 of the sub-line writes the encryption keys K ("Key 1" to "Key 4") to two electronic control units 21 (ECUs). That is, as with the case of FIG. 11, the writer 142 of the sub-line writes the encryption key K ("Key 1") and the encryption key K ("Key 2") to the first ECU, and rights the encryption key K ("Key 3") and the encryption key K ("Key 4") to the second ECU. As with the case of FIG. 11, the writer 142 of the main line writes the encryption keys K ("Key 5" and "Key 6") to the third electronic control unit 21 (ECU).

Note that, with regard to the third ECU, in the case where it is possible to write encryption keys K in the sub-line instead of the main line, the writer 142 of the sub-line may write the encryption keys K ("Key 5" and "Key 6") to the third ECU.

As shown in FIG. 12, the server 141 of the production apparatus 140 temporarily stores the fourth encryption key ("Key 8"), and writes, in the main line, the fourth encryption key ("Key 8") that has been temporarily stored to the component (central gateway 23) that is a vehicle-model-dependent component.

Note that, as shown in FIG. 1, the production apparatus 140 may include a backup memory and/or a backup storage (hereinafter "backup memory") 143 to store a backup of encryption keys K generated by the generator 120. The writer 142 may be configured to, in the case where the writer 142 fails to acquire an encryption key K from the generator 120, acquire the encryption key K from the backup memory 143 and write the acquired encryption key K to a vehicle and/or an electric component of a vehicle.

When the production plan is confirmed (registered) a predetermined number of days (e.g., five days) before the planned production date, the manager 110 promptly outputs the production plan to the generator 120. On the date of reception (e.g., the night of the same day), the generator 120 generates encryption keys K based on the production plan and sends out the generated encryption keys K to the production apparatus 140. The production apparatus 140 stores the encryption keys K in the backup memory 143 at least until the planned production date (in the present example, stores the keys for four days). The production apparatus 140 then sends out keys in an amount (number) corresponding to the number of vehicles to be produced to the writer 142 on the planned production date (four days later in the present example). Then, when the production of vehicles at the production apparatus 140 is complete, the backup memory 143 may delete the stored encryption keys K.

Main characteristic items and effects of encryption key generation systems S described in the foregoing example embodiments and the like are as follows.

(Item A1) An encryption key generation system (S) including a manager 110 (production plan management system 111) to manage a vehicle production plan, and a generator 120 (encryption key management-and-generation system 121) to generate at least one encryption key K for software of at least one vehicle and/or at least one electric component, wherein the generator 120 is configured or programmed to generate the at least one encryption key K based on the vehicle production plan transmitted from the manager 110.

With this configuration, since the encryption keys K are generated based on the vehicle production plan, it is possible to generate encryption keys K just enough for the vehicles to be produced according to the vehicle production plan. Thus, the encryption key generation system S can reduce the management cost and the generation cost of the encryption keys K. Note that usual automobile manufacturers need to manage a large number of encryption keys at a production location because a large number of encryption keys are generated and sent out at once to the production location, and therefore the management cost for the encryption keys is high. Furthermore, encryption keys are generated on a per-model basis to achieve low-volume, high-variety production of vehicles at the production location, but encryption keys generated for the models not ordered will not be used, resulting in a waste of generation costs. The encryption key generation system S makes it possible to eliminate or reduce the likelihood that such a situation will occur.

(Item A2) The encryption key generation system S according to item A1, wherein the manager 110 is configured or programmed to output, to the generator 120, identification information relating to the at least one vehicle and the number of the at least one vehicle to be produced that are included in the vehicle production plan, and the generator 120 is configured or programmed to, based on the identification information relating to the at least one vehicle and the number of the at least one vehicle to be produced, generate, for the at least one vehicle indicated by the identification information, the at least one encryption key K in an amount corresponding to the number of the at least one vehicle to be produced.

With this configuration, since the generator 120 generates, based on the identification information relating to (e.g., model of) the vehicle(s) and the number of the vehicles to be produced that are outputted from the manager 110, for the vehicle(s) indicated by the identification information, the encryption keys K in an amount (number) corresponding to the number of the vehicles to be produced, it is possible to generate the encryption keys K in an amount (number) just sufficient for the production at the time suited for the production of the vehicle(s). Thus, it is possible to reduce the management cost and the generation cost of the encryption keys K as much as possible.

(Item A3) The encryption key generation system S according to item A1 or A2, further including a memory and/or a storage 130 (engineering BOM 131) to store structure information relating to at least one component including the at least one electric component of the at least one vehicle, wherein the generator 120 is configured or programmed to generate the at least one encryption key K based on the structure information stored in the memory and/or the storage 130.

With this configuration, since the encryption keys K are generated based on the structure information relating to component(s) of vehicle(s) (for example, information relating to software, information relating to a function of the encryption key K, etc.), it is possible to generate encryption keys K corresponding to the types of components of vehicles.

(Item A4) The encryption key generation system S according to item A3, wherein the memory and/or the storage 130 (engineering BOM 131) stores, as the structure information, information relating to software to be preinstalled in the at least one component, and the generator 120 is configured or programmed to generate authentication information for the software based on the information relating to the software.

With this configuration, the generator 120 generates, as structure information, authentication information for software of component(s). Thus, it is possible to provide authentication information for software to components (electric components) including the software. Therefore, with regard to an electric component provided with the authentication information of the software, in the case where the electric component has a self-diagnostic function that is based on the authentication information for the software, the electric component is able to determine, at the time of self-diagnosis, whether the software of the component has been tampered with or not.

(Item A5) The encryption key generation system S according to any one of items A1 to A4, wherein, depending on a type of the at least one encryption key K, the at least one encryption key K differs per vehicle to which the at least one encryption key K is written and/or differs per electronic control unit 21 to which the at least one encryption key K is written and which is the at least one electric component.

With this configuration, since each encryption key K differs from one vehicle to another and/or differs from one electronic control unit 21 to another depending on the type of the encryption key K, it is possible to improve security of the vehicles and/or the electronic control units 21.

(Item A6) The encryption key generation system S according to item A5, further including at least one server 141 (at least one server 141 of at least one production apparatus 140) to be used in a main line to produce the at least one vehicle and in a sub-line different from the main line, wherein the at least one encryption key K includes at least one first encryption key and at least one second encryption key, and the at least one server 141 is configured to write the at least one first encryption key to the at least one electronic control unit 21 in the sub-line and write the at least one second encryption key to the at least one electronic control unit 21 in the main line.

With this configuration, since different encryption keys K (first encryption key(s) and second encryption key(s)) are written to the electronic control units 21 in the respective types of lines to produce vehicles (sub-line and main line), it is possible to improve the security of the electronic control units 21 in the sub-line and the main line.

(Item A7) The encryption key generation system S according to item A5, further including at least one server 141 (at least one server 141 of at least one production apparatus 140) to be used in a main line to produce the at least one vehicle and in a sub-line different from the main line, wherein the at least one encryption key K includes at least one first encryption key to be used in the sub-line and at least one second encryption key to be used in the main line, and the at least one server 141 is configured to write the at least one first encryption key and the at least one second encryption key to the at least one electronic control unit 21 in the sub-line.

With this configuration, since the first encryption key(s) and the second encryption key(s) are written to the electronic control unit(s) 21 in the sub-line, in the case where there is not enough time to write all second encryption keys in the main line, it is possible to address such an issue by writing all the second encryption keys in the sub-line.

(Item A8) The encryption key generation system S according to item A5, further including at least one server 141 (at least one server 141 of at least one production apparatus 140) to be used in a main line to produce the at least one and in a sub-line different from the main line, wherein the at least one encryption key K includes at least one third encryption key that is at least one vehicle-model-independent key and at least one fourth encryption key that is at least one vehicle-model-dependent key, and the at least one server 141 is configured to, in the sub-line, write the at least one third encryption key to at least one vehicle-model-independent component (for example, CGW) and temporarily store the at least one fourth encryption key, and write, to at least one vehicle-model-dependent component (for example, CGW) in the main line, the at least one fourth encryption key that has been temporarily stored.

With this configuration, in the sub-line, the third encryption key that is vehicle-model-independent is written to a vehicle-model-independent component (for example, CGW), and the fourth encryption key that is vehicle-model-dependent cannot be written to a vehicle-model-dependent component (CGW) because the model cannot be identified in the sub-line, and is therefore temporarily stored. The fourth encryption key that has been temporarily stored is written to a vehicle-model-dependent component (CGW) in the main line. Therefore, in the case where there is not enough time to acquire the fourth encryption key(s) from the generator 120 in the main line, by temporarily storing the fourth encryption key(s) in the sub-line, it is possible to eliminate or reduce the waiting time for the fourth encryption key(s) to be acquired from the generator 120 in the main line. Therefore, the server 141 can perform writing appropriately and rapidly in the main line.

(Item A9) The encryption key generation system S according to any one of items A6 to A8, wherein the at least one server 141 is configured to activate the at least one encryption key K in the main line or outside the main line in a case that the at least one encryption key K is properly written.

With this configuration, since the server 141 activates (for example, turns on a set value of) the encryption key(s) K in the main line or outside the main line after confirming that the encryption key(s) K has been properly written, it is possible to appropriately activate the encryption key(s) K.

(Item A10) The encryption key generation system S according to item A4, further including a writer 142 to write the at least one encryption key K and the authentication information for the software generated by the generator 120 to the at least one vehicle and/or the at least one electric component of the at least one vehicle indicated by the vehicle production plan.

With this configuration, the writer 142 writes the encryption key(s) K and the authentication information for the software generated by the generator 120 to the vehicle(s) and/or electric component(s) of the vehicle(s) indicated by the production plan. Thus, in the case where a vehicle or an electric component has a self-diagnostic function that is based on the authentication information for the software, the vehicle or the electric component is able to determine, at the time of self-diagnosis (for example, when the ECU is activated, when ignition is on, when the engine is turned on), whether the software has been tampered with or not. Therefore, it is possible to reduce tampering with the software of the vehicle and the electric component, and it is possible to provide a secure encryption key generation system S. That is, it is possible to ensure security for vehicles or electric components of vehicles.

(Item A11) The encryption key generation system S according to item A10, further including a backup memory and/or a backup storage 143 to store a backup of the at least one encryption key K generated by the generator 120, wherein the writer 142 is configured to, in a case that the writer 142 fails to acquire the at least one encryption key K from the generator 120, acquire the at least one encryption key K from the backup memory and/or the backup storage 143 and write the acquired at least one encryption key K to the at least one vehicle and/or the at least one electric component of the at least one vehicle.

With this configuration, even in a case that the writer 142 fails to acquire the encryption key(s) K from the generator 120 because the generator 120 does not operate or because of a bad connection with the generator 120 and/or the like, the writer 142 acquires the encryption key(s) K from the backup memory and/or backup storage 143 and writes the acquired encryption key(s) K to the vehicle(s) or the electric component(s) of the vehicle(s). Thus, it is possible to maintain productivity and provide a secure encryption key generation system S.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An encryption key generation system (S) comprising:
a manager (110) to manage a vehicle production plan; and
a generator (120) to generate at least one encryption key (K) for software of at least one vehicle and/or at least one electric component; wherein
the generator (120) is configured or programmed to generate the at least one encryption key (K) based on the vehicle production plan transmitted from the manager (110).

2. The encryption key generation system (S) according to claim 1, wherein
the manager (110) is configured or programmed to output, to the generator (120), identification information relating to the at least one vehicle and the number of the at least one vehicle to be produced that are included in the vehicle production plan; and
the generator (120) is configured or programmed to, based on the identification information relating to the at least one vehicle and the number of the at least one vehicle to be produced, generate, for the at least one vehicle indicated by the identification information, the at least one encryption key (K) in an amount corresponding to the number of the at least one vehicle to be produced.

3. The encryption key generation system (S) according to claim 1 or 2, further comprising:
a memory and/or a storage (130) to store structure information relating to at least one component including the at least one electric component of the at least one vehicle; wherein
the generator (120) is configured or programmed to generate the at least one encryption key (K) based on the structure information stored in the memory and/or the storage (130).

4. The encryption key generation system (S) according to claim 3, wherein
the memory and/or the storage (130) stores, as the structure information, information relating to software to be preinstalled in the at least one component; and
the generator (120) is configured or programmed to generate authentication information for the software based on the information relating to the software.

5. The encryption key generation system (S) according to any one of claims 1 to 4, wherein, depending on a type of the at least one encryption key (K), the at least one encryption key (K) differs per vehicle to which the at least one encryption key (K) is written and/or differs per electronic control unit (21) to which the at least one encryption key (K) is written and which is the at least one electric component.

6. The encryption key generation system (S) according to claim 5, further comprising:
at least one server (141) to be used in a main line to produce the at least one vehicle and in a sub-line different from the main line; wherein
the at least one encryption key (K) includes at least one first encryption key and at least one second encryption key; and
the at least one server (141) is configured to:
write the at least one first encryption key to the at least one electronic control unit (21) in the sub-line; and
write the at least one second encryption key to the at least one electronic control unit (21) in the main line.

7. The encryption key generation system (S) according to claim 5, further comprising:
at least one server (141) to be used in a main line to produce the at least one vehicle and in a sub-line different from the main line; wherein
the at least one encryption key (K) includes at least one first encryption key to be used in the sub-line and at least one second encryption key to be used in the main line, and
the at least one server (141) is configured to write the at least one first encryption key and the at least one second encryption key to the at least one electronic control unit (21) in the sub-line.

8. The encryption key generation system (S) according to claim 5, further comprising:
at least one server (141) to be used in a main line to produce the at least one vehicle and in a sub-line different from the main line; wherein
the at least one encryption key (K) includes at least one third encryption key that is at least one vehicle-model-independent key and at least one fourth encryption key that is at least one vehicle-model-dependent key; and
the at least one server (141) is configured to:
in the sub-line, write the at least one third encryption key to at least one vehicle-model-independent component and temporarily store the at least one fourth encryption key; and
write, to at least one vehicle-model-dependent component in the main line, the at least one fourth encryption key that has been temporarily stored.

9. The encryption key generation system (S) according to any one of claims 6 to 8, wherein
the at least one server (141) is configured to activate the at least one encryption key (K) in the main line or outside the main line in a case that the at least one encryption key (K) is properly written.

10. The encryption key generation system (S) according to claim 4 or any of claims 5 to 9 further being dependent on claim 4, further comprising:
a writer (142) to write the at least one encryption key (K) and the authentication information for the software generated by the generator (120) to the at least one vehicle and/or the at least one electric component of the at least one vehicle indicated by the vehicle production plan.

11. The encryption key generation system (S) according to claim 10, further comprising:
a backup memory and/or a backup storage (143) to store a backup of the at least one encryption key (K) generated by the generator (120); wherein
the writer (142) is configured to, in a case that the writer (142) fails to acquire the at least one encryption key (K) from the generator (120), acquire the at least one encryption key (K) from the backup memory and/or the backup storage (143) and write the acquired at least one encryption key (K) to the at least one vehicle and/or the at least one electric component of the at least one vehicle.
